(19) Europäisches Patentamt
European Patent Office
Office européen des brevets

(11) Publication number: **0 028 419**
**A2**

(12) # EUROPEAN PATENT APPLICATION

(21) Application number: 80106787.7

(22) Date of filing: 04.11.80

(51) Int. Cl.³: C 08 G 73/12
C 08 L 79/08

(30) Priority: 05.11.79 JP 142056/79

(43) Date of publication of application:
13.05.81 Bulletin 81/19

(84) Designated Contracting States:
CH DE FR GB LI

(71) Applicant: Hitachi, Ltd.
5-1, Marunouchi 1-chome
Chiyoda-ku Tokyo 100(JP)

(72) Inventor: Nishikawa, Akio
1346-12, Mizukicho
Hitachi-shi(JP)

(72) Inventor: Suzuki, Hiroshi
161-21, Ishinazakacho
Hitachi-shi(JP)

(72) Inventor: Kohkame, Hisashi
10-10, Fujisaki-5-chome
Narashino-shi(JP)

(74) Representative: Von Füner, Alexander, Dr. K. L. Schiff
Dr. A. v. Füner et al,
Dipl. Ing. P. Strehl Dr. U. Schübel-Hopf Dipl. Ing. D.
Ebbinghaus Dr. Ing. D. Finck Patentanwalte
Mariahilfplatz 2&3
D-8000 München 90(DE)

(54) **Imides and process for producing the same.**

(57) An imide having the structural units of the formulae (I) and (II), or (I), (II) and (IV),

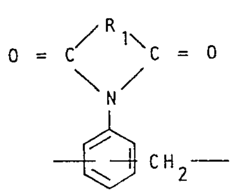 (I), 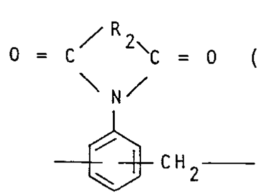 (II),

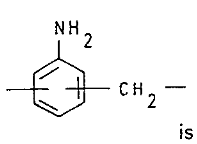 (IV)

is soluble excellently in a low-boiling solvent and can give alone or together with one or more amides, epoxy compounds, unsaturated polyesters, diallyl phthalates, or the like, heat resistant polymers. The imide can be produced by, e.g., reacting tetrahydrophthalic anhydride with aniline resin with or without followed by dehydration and ring closure, reacting the resulting reaction product with an ethylenically unsaturated carboxylic acid anhydride such as maleic anhydride, followed by dehydration and ring closure.

EP 0 028 419 A2

# IMIDES AND PROCESS FOR PRODUCING THE SAME

This invention relates to an imide which is useful as an intermediate for producing polymers, a process for producing the same and a composition including the same.

Heretofore, as intermediates for heat resistant polymers, there have been known N,N'-substituted bis-imides (U.S. Patent No. 3,562,223), reaction products of maleic anhydride with aniline resin (Japanese Patent Appln Kokoku (Post-Exam Publn) Nos. 21517/75, 42080/78 and 28160/77), reaction products of tetrahydrophthalic anhydride with a bis-imide (Japanese Patent Appln Kokoku (Post-Exam Publn) No. 28160/77), and the like. But these intermediates have many disadvantages in that their softening points are high, their solubilities in a solvent such as acetone, toluene, or the like are not good, and the like.

It is an object of this invention to provide a novel imide useful as intermediate for producing heat resistant polymers, particularly a novel imide excellent in solubility in a low-boiling point solvent, a process for producing the same and a composition including the same.

The imide of this invention is characterized by having the structural units of the formulae (I) and (II) in the molecule:

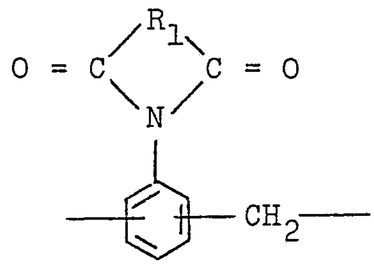

(I)

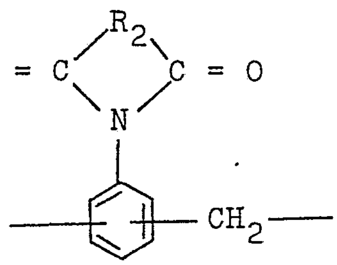

(II)

wherein $R_1$ is an ethylenically unsaturated group;

$R_2$ is 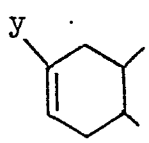 in which y is H, $CH_3$, $C_2H_5$, Cl, Br or $OCH_3$, or 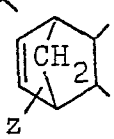 in which z is H or $CH_3$, or having the structural units of the formulae (I), (II) and (IV) in the molecule:

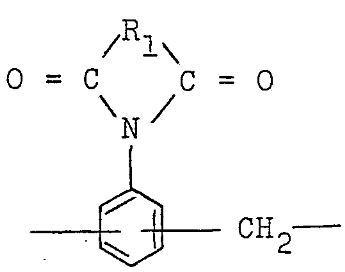

(I)

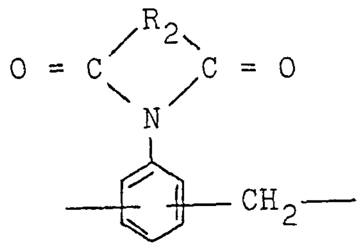 (II)

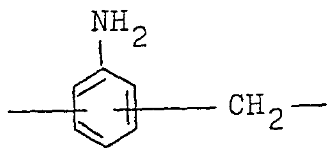 (IV)

wherein $R_1$ and $R_2$ are as defined above.

The term "ethylenically unsaturated group" means 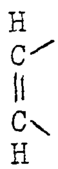 , 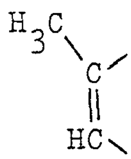 , 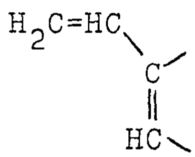 , 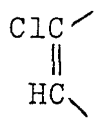 , 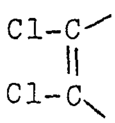 , 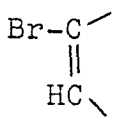 , etc. The imide of this invention has a molecular weight of preferably from about 400 to 2000.

The imide of this invention having the structural units of the formulae (I) and (II) or (I), (II) and (IV) can be produced, for example, by reacting a compound of the formula:

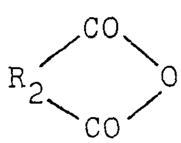 (VIII)

wherein $R_2$ is as defined above, with an aniline resin to give a reaction product, reacting the resulting reaction product with an ethylenically unsaturated

carboxylic acid anhydride of the formula:

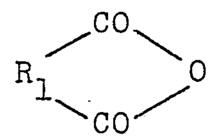

(IX)

wherein $R_1$ is as defined above, to give an amide acid, followed by dehydration and ring closure.

In the case of producing the imide having the unit of the formula (IV) in addition to the units of the formulae (I) and (II), a total equivalent amount of the compound of the formula (VIII) and the ethylenically unsaturated carboxylic acid anhydride of the formula (IX) is set up so that it is smaller than the equivalent amount of the amino group in the aniline resin.

Infrared absorption spectrum of the imide having the structural units of the formulae (I) and (II) or (I), (II) and (IV) of this invention shows characteristic absorptions at 1710 $cm^{-1}$ and 1780 $cm^{-1}$ based on imide bonds adjacent to $>C=O$ groups and at 950 $cm^{-1}$ based on the ethylenical double bond.

As the compound of the formula (VIII) for forming the structural unit of the formula (II), there can be used at least one of tetrahydrophthalic anhydride (hereinafter referred to as "THPA"), methyltetrahydrophthalic anhydride, ethyltetrahydrophthalic anhydride, chlorotetrahydrophthalic anhydride, bromotetrahydrophthalic anhydride, methoxytetrahydrophthalic anhydride, endomethylenetetrahydrophthalic

anhydride and methylendomethylenetetrahydrophthalic anhydride. Among them, THPA, endomethylenetetrahydrophthalic anhydride and methylendomethylenetetrahydrophthalic anhydride are preferable.

As the ethylenically unsaturated carboxylic acid anhydride of the formula (IX) for forming the structural unit of the formula (I), there can be used at least one of maleic anhydride, citraconic anhydride, itaconic anhydride, dichloromaleic anhydride and the products of Diels-Alder reaction between at least one of these anhydrides mentioned above and at least one cyclodiene such as pentacyclodiene, hexacyclodiene, or the like.

As the aniline resin for forming the major chain of the imide of this invention, there can be used conventional one having the generally admitted formula:

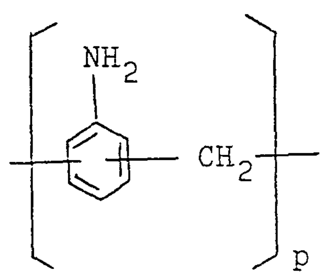

(X)

wherein p (the number of nucleus) is 10.0 or lower on an average, preferably 2.0 to 6.0 on an average. The aniline resin can be prepared by a conventional method. The aniline resin has a softening temperature of 200°C or lower. As is well known in this art, the number of nucleus of the aniline resin can be adjusted by properly selecting the reaction proportions (molar

ratios) of aniline, an aldehyde or a ketone. In general, the aniline resin useful in this invention can be prepared by reacting 1.5 moles or less of an aldehyde, particularly preferably 0.3 to 1.2 moles of an aldehyde with 1 mole of aniline.

Among the imides having the structural units of the formulae (I) and (II), particularly useful imides are those having the formula:

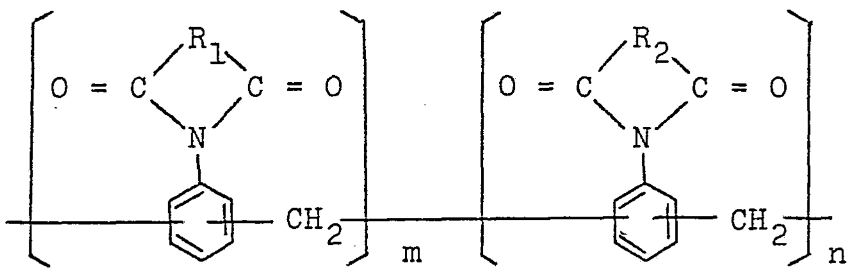 (III)

wherein m and n are more than zero, and m + n is preferably 10 or less on an average, particularly preferably 2 to 6. When m + n is more than 10, the solubility in a solvent becomes worse gradually, but the values of m and n can be selected depending on purposes and utility of the imide of this invention. As to the ratio of m/n, there is a tendency to improve the solubility and electrical properties of the imide of this invention but to lower curing characteristics with a decrease of the ratio m/n. Therefore, the value of m/n should be selected depending on purposes and utility of the imide of this invention. In general, the m/n ratio of 0.05 to 20 is preferable.

Among the imides having the structural units

of the formulae (I), (II) and (IV), particularly useful imides are those having the formula:

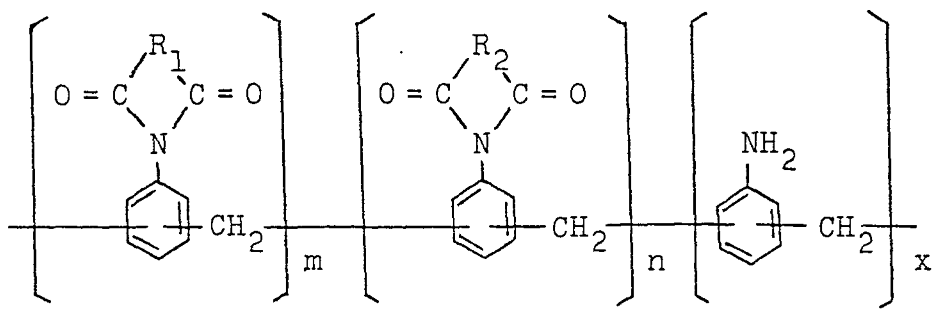

(V)

wherein m, n and x are more than zero, and m + n + x is preferably 10 or less on an average, particularly preferably 2 to 6. The relationship between the sum of m, n and x and the solubility of the imide of the formula (V) is as mentioned above. Further, as to the ratio of m/n, the same thing as mentioned above can be applied to this case. The number of x is preferably 0.5 to 6 on an average, particularly preferably 1 to 3. There is a tendency to improve the solubility and curing characteristics of the imide of the formula (V) with an increase of the number of x.

Needless to say, the formulae (III) and (V) are represented schematically so as to include the arrangement of the units of the formulae (I), (II) and (IV) not only at random but also as blocks.

The molar amounts of the compound of the formula (VIII) such as THPA, the ethylenically unsaturated carboxylic acid anhydride of the formula (IX) and the aniline resin to be reacted can be selected

properly depending on the numbers of m and n, or m, n and x of the desired imide of the formula (III) or (V).

The imide of this invention can be produced as follows. Since reactivities of the THPA type compound of the formula (VIII) and the ethylenically unsaturated carboxylic acid anhydride of the formula (IX) for the amino group of the aniline resin are different, the aniline resin is reacted with the THPA type compound in a first step to yield an amide acid, which is subjected to dehydration and ring closure to give a compound of the formula (VI) or (VII):

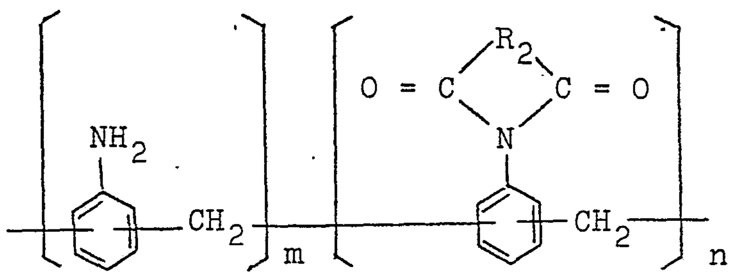

(VI)

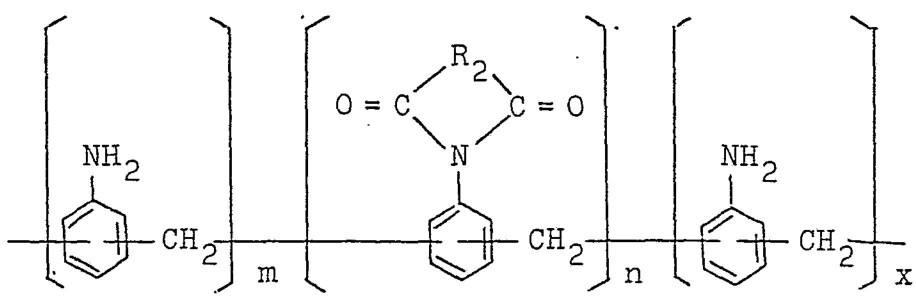

(VII)

wherein $R_1$, $R_2$, m, n and x are as defined above, and in a second step, the compound of the formula (VI) or (VII) is reacted with the ethylenically unsaturated

carboxylic acid anhydride of the formula (IX) followed by dehydration and ring closure to give the imide of the formula (III) or (V).

In another process, the aniline resin can be reacted with the THPA type compound of the formula (VIII) in a first step to yield an amide acid, the resulting amide acid is reacted with the ethylenically unsaturated carboxylic acid anhydride of the formula (IX) in a second step, and in a third step, all the amide bonds are dehydrated with ring closure to give the imide of the formula (III) or (V).

In the above-mentioned reactions, acid amides of the formulae (XI) and/or (XII) and/or (XIII) are produced as intermediates:

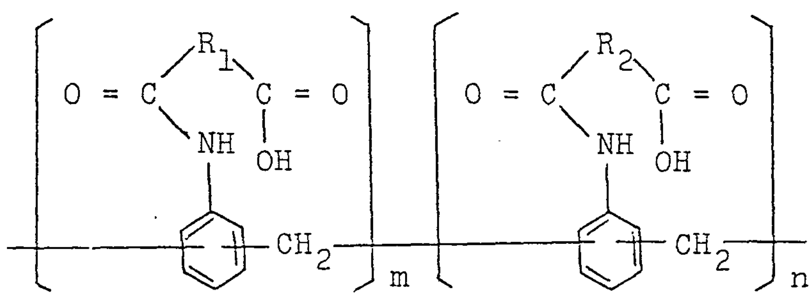

(XI)

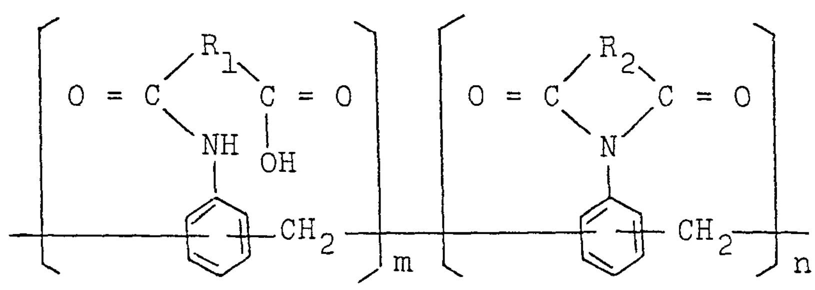

(XII)

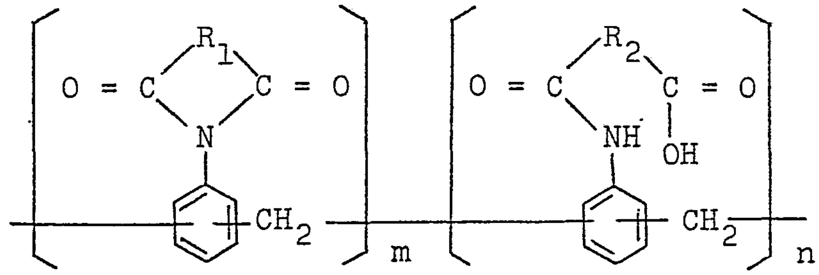

(XIII)

wherein $R_1$, $R_2$, m and n are as defined above. These intermediates of the formulae (XI), (XII) and (XIII) are stable when dissolved in a suitable solvent, so that these intermediates can be used for preparing compositions mentioned hereinafter, in addition to the production of the imide of the formula (III) or (V).

More in detail, the synthesis of an amide acid and the dehydration and ring closure reaction (imide formation reaction) in each step can proceed, for example, as follows:

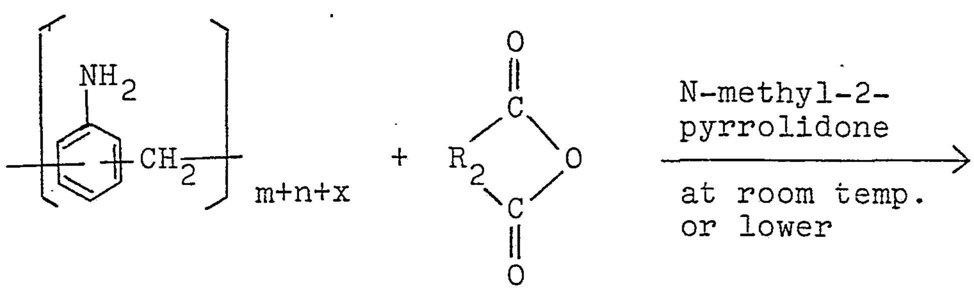


(e.g. THPA)

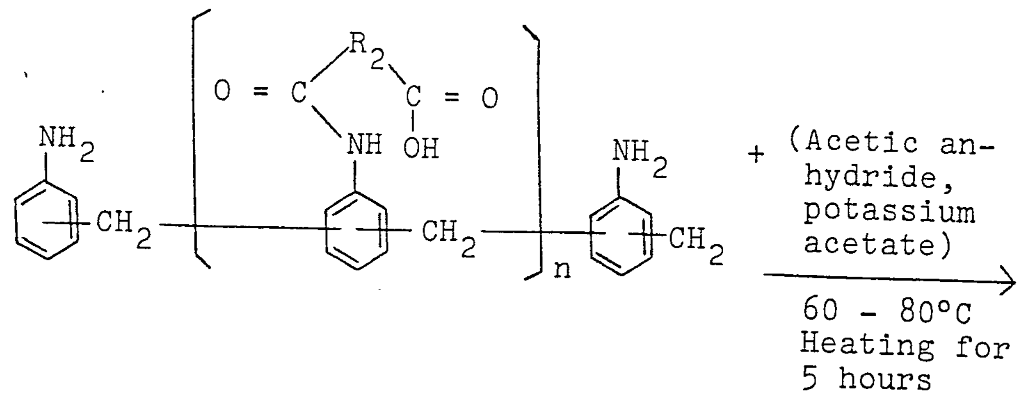


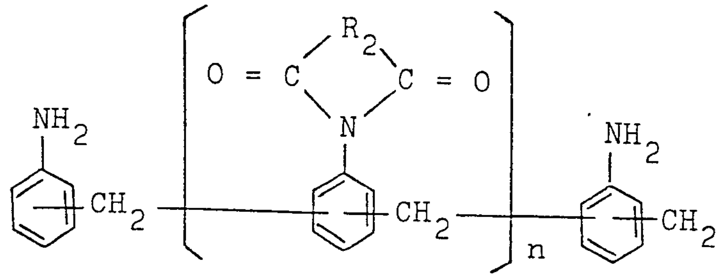

(XIV)

(XIV) +

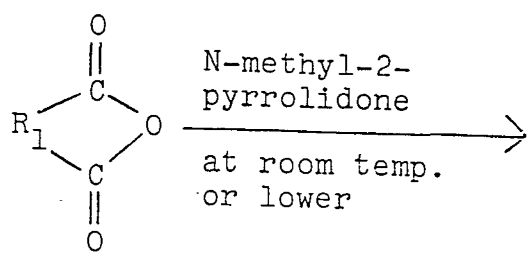


(e.g. maleic
anhydride)

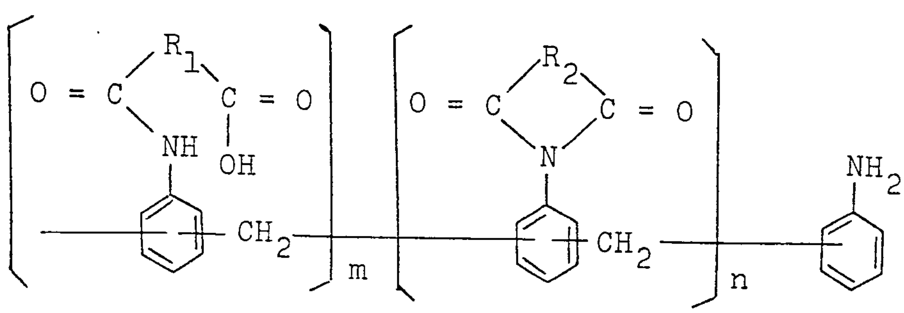

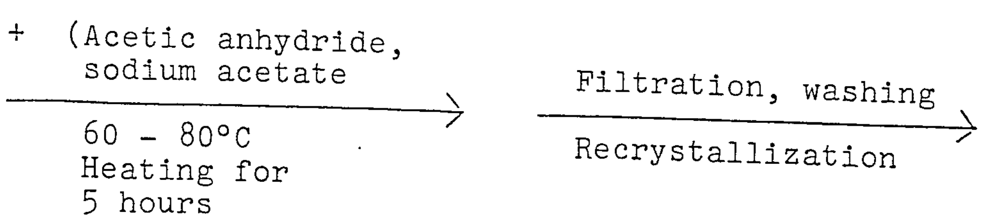

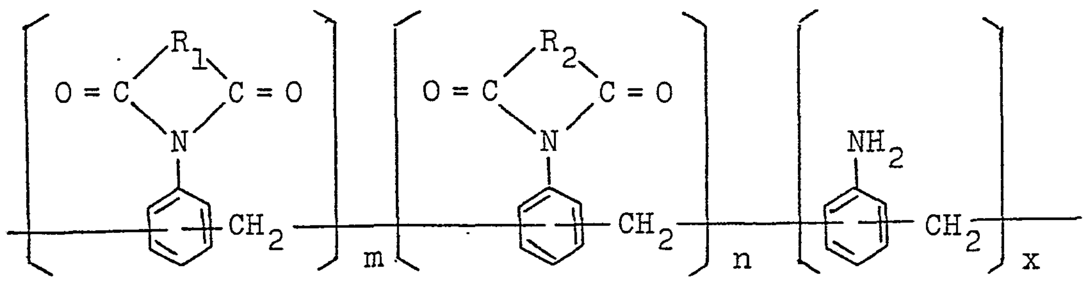

In still another process, the aniline resin, the THPA type compound of the formula (VIII) and the ethylenically unsaturated carboxylic acid anhydride of the formula (IX) may be reacted simultaneously in a solvent at -10 to +30°C to form an amide acid, followed by dehydration and ring closure with heating at 60 to 120°C. Or, the above-mentioned three reactants may be heated to become molten state so as to proceed the amidation and imide formation reaction continuously. The amidation and the imide formation reaction as mentioned above may also be carried out by using reaction conditions disclosed, for example, in Journal of Polymer Science, Part A-1, 3135 (1963), Kogyo Kagaku Zasshi 66, 382 (1963), U.S. Patent No. 2,710,853, and Japanese Patent Appln Kokoku (Post-Exam Publn) No. 10999/61.

The above-mentioned reactions may be carried out in a polar solvent such as N-methyl-2-pyrrolidone, N,N'-dimethyl formamide, dimethyl sulfoxide, dimethyl acetamide etc., or in a generally used solvent, acetone, methyl ethyl ketone, methyl isobutyl ketone, dioxane, methyl Cellosolve, toluene, etc. As to the dehydration and ring closure, it can be

carried out in the presence of a dehydrating agent such as acetic anhydride, polyphosphoric acid anhydride, concentrated sulfuric acid, or the like. The addition of an amine such as triethylamine, or a metal salt of acetic acid such as potassium acetate, sodium acetate, lithium acetate, etc. as a catalyst for ring closure to the dehydration reaction system is effective.

The imide of this invention having the structural units of the formulae (I) and (II), or (I), (II) and (IV), is excellent in solubility in an organic solvent, and particularly the imide of the formula (V) has self-curing properties, so that it can widely be used as a varnish for impregnation or coating, or as a raw material for making cast materials, adhesives, resin laminated boards, prepregs, a varnish for filament windings as well as powdered molding materials.

In the case of using the imide of this invention or the intermediate of the formula (XI), (XII), or (XIII) or a mixture thereof as a varnish, it can be used by dissolving it in a solvent such as acetone, methyl ethyl ketone, methyl isobutyl ketone, dioxane, methyl Cellosolve, ethyl Cellosolve, or a mixture thereof. The imide of this invention can also be dissolved in a high-boiling-point solvent such as N-methyl-2-pyrrolidone, N,N'-dimethyl formamide, or the like.

The imide of this invention having the structural units of the formulae (I) and (II), or (I),

(II) and (IV), or having the formula (III) or (V), or the intermediate of the formula (XI), (XII) or (XIII) or a mixture thereof can be used for preparing a resin composition together with one or more amines (preferably aromatic diamines, for example, 4,4'-diaminodiphenylmethane), epoxy compounds (or resin) (preferably having two or more epoxy groups), carboxylic acid anhydrides, unsaturated polyesters (preferably polyesters derived from maleic anhydride, phthalic acid, ethylene glycol, etc.) aromatic compounds containing at least one allyl group (such as diallyl phthalate, diallyl isophthalate), phenolic resins, various styrene copolymers, various diene compounds including butadiene type compounds, compounds which can react with $NH_2$ groups such as N,N'-substituted bis-maleimides, compounds which can bond with ethylenic double bonds by the Diels-Alder reaction, etc. The above-mentioned components for giving a resin composition can be used in an amount of 10 to 1000 parts by weight per 100 parts by weight of the compound of this invention. When the above-mentioned resin compositions are used as varnishes, at least one of these resin compositions is dissolved in an organic solvent such as mentioned above in an amount of 5% by weight or more, preferably 50 - 70% by weight or less.

Cured resins having good properties such as heat resistance can be obtained by heating these resin compositions at a temperature of e.g. 100 - 300°C or

100 - 250°C. Since these compositions can give articles excellent in heat resistance after cured, they are useful as electrical insulating materials.

When the imide of this invention or the intermediate as mentioned above is used for the above-mentioned applications as it is or as a composition, there can be added thereto one or more conventional curing catalysts for resins, modifiers, fillers, surface treating agents, flame retardants, mold release agents, pigments, plasticizers, anti-oxidants, etc.

This invention is illustrated by way of the following Examples, in which all parts are by weight unless otherwise specified.

Example 1

Three kinds of aniline-formaldehyde resins as listed in Table 1 were prepared by condensation reaction of aniline and formaldehyde using a conventional method.

Table 1

| Kind | Number of nucleus | Softening point (°C) |
|---|---|---|
| A | 2.9 | 59 - 63 |
| B | 3.5 | 71 - 78 |
| C | 6.0 | 168 - 175 |

In the next place, 100 parts (0.31 mole) of aniline-formaldehyde resin (A) was dissolved in acetone and 45.9 parts (0.31 mole) of THPA (tetrahydrophthalic anhydride) was added thereto and the reaction was carried out in nitrogen gas at room temperature or lower for about 2 hours. Subsequently, 50 parts of acetic anhydride (a dehydrating agent) and 0.5 part of potassium acetate (a catalyst for ring closure) were added to the reaction solution and the reaction was carried out at from room temperature to 40°C for 30 minutes. Then the reaction solution was cooled to room temperature and 60.8 parts (0.62 mole) of maleic anhydride (MA) was added thereto, and the reaction was continued for about 2 hours with stirring.

The reaction product was added dropwise to water to give a precipitate, which was filtered and washed repeatedly and dried under reduced pressure of 0.1 mm Hg at 80°C to give an imide of the formula (III) (m = 2, n = 1) (a) having a softening point of 110 to 130°C. The resulting imide had absorption at 1710 $cm^{-1}$ and 1780 $cm^{-1}$ due to the imido group adjacent to carbonyl groups in infrared (IR) spectrum.

Example 2

100 Parts (0.267 mole) of aniline-formaldehyde resin (B) listed in Table 1, 74 parts (0.5 mole) of THPA and 39 parts (0.4 mole) of MA were reacted in the same manner as described in Example 1 to give an imide

of the formula (V) (m = 1.5, n = 1.9, x = 0.1) (b) having a softening point of 125 to 135°C. The IR spectrum of the resulting imide showed characteristic absorption of the imido group at 1710 $cm^{-1}$ and 1780 $cm^{-1}$.

Example 3

100 Parts (0.156 mole) of aniline-formaldehyde resin (C) listed in Table 1, 44.4 parts (0.3 mole) of THPA and 61 parts (0.624 mole) of MA were reacted in the same manner as described in Example 1 to give an imide of the formula (V) (m = 4.0, n = 1.9, x = 0.1) (c) having a softening point of 160 to 170°C. The IR spectrum of the resulting imide showed characteristic absorption of the imido group at 1710 $cm^{-1}$ and 1780 $cm^{-1}$.

Example 4

100 Parts (0.156 mole) of aniline-formaldehyde resin (C) listed in Table 1, 23.1 parts (0.156 mole) of THPA and 76.4 parts (0.78 mole) of MA were reacted in the same manner as described in Example 1 to give an imide of the formula (V) (m = 5.0, n = 1.0, x = 0) (d) having a softening point of 151 to 160°C. The IR spectrum of the resulting imide showed characteristic absorption of the imido group at 1710 $cm^{-1}$ and 1780 $cm^{-1}$.

Example 5

100 Parts (0.267 mole) of aniline-formaldehyde resin (B) listed in Table 1, 39.5 parts (0.267 mole) of THPA and 65 parts (0.667 mole) of MA were reacted in the same manner as described in Example 1 to give an imide of the formula (V) ($m = 2.5$, $n = 1.0$, $x = 0$) (e) having a softening point of 135 to 145°C. The IR spectrum of the resulting imide showed characteristic absorption of the imido group at 1710 $cm^{-1}$ and 1780 $cm^{-1}$.

Example 6

10.0 Parts (0.024 mole) of aniline-formaldehyde resin (B) listed in Table 1 was dissolved in 200 ml of acetone and 5.6 parts (0.035 mole) of endomethylenetetrahydrophthalic anhydride was added thereto and the reaction was carried out in nitrogen gas at room temperature or lower for about 3 hours with stirring. Subsequently, 4.8 parts (0.049 mole) of MA was added to the reaction solution and the reaction was carried out at room temperature or lower for 1 hour, followed by addition of 2.5 parts of acetic anhydride and 0.1 part of nickel acetate and stirring for 20 hours.

The reaction product was added dropwise to 500 ml of distilled water to give a precipitate, which was filtered, washed and dried to give an imide of the formula (V) ($m = 2.0$, $n = 1.5$, and $x = 0$) (f) having a softening point of 140 to 165°C. The resulting imide had absorption at 1711 $cm^{-1}$ and 1780 $cm^{-1}$ due to the

imido group in IR spectrum.

Example 7

To 10.0 parts (0.024 mole) of aniline-formaldehyde resin (B) listed in Table 1 dissolved in 200 ml of acetone, 3.7 parts (0.023 mole) of methyltetrahydrophthalic acid anhydride was added and the reaction was carried out at room temperature or lower with stirring for 5 hours. Subsequently, 6.0 parts (0.061 mole) of MA was added to the reaction solution and the reaction was carried out at room temperature or lower for 1 hour, followed by addition of 0.02 part of acetic anhydride and 0.02 part of potassium acetate thereto and standing for 3 hours with stirring. The reaction product was added to 500 ml of distilled water with stirring to give a precipitate, which was filtered, washed and dried to give an imide of the formula (V) ($m = 2.5$, $n = 1.0$, and $x = 0$) (g) having a softening point of 153 to 175°C. The IR spectrum of the resulting imide showed characteristic absorption of the imide group at 1712 $cm^{-1}$ and 1778 $cm^{-1}$.

Application Examples 1 to 11

Compositions as listed in Table 2 were prepared by mixing each imide obtained in Examples 1 to 5 with a diamine, a novolac type epoxy compound (epoxy equivalent 225), an unsaturated polyester

(isophthalic acid-maleic anhydride-glycol; PS 518, a trade name, manufactured by Hitachi Chemical Co., Ltd.), a diallyl phthalate compound, or N,N'-substituted bis-maleimide (N,N'-4,4'-diphenylmethane-bis-maleimide).

Glass transition points ($T_g$) of individual cured compositions were measured and listed in Table 2. After adding 60% by weight of silica glass powder and 10% by weight of glass chops (6 mm long) to individual compositions mentioned above to prepare molding materials, flexural strength of each cured article was measured according to JIS 6911 at 180°C and retention percent of each initial value of fluxural strength allowed to stand at 200°C for 30 days was also measured and listed in Table 2.

Application Example 12

Solubilities of the imides obtained in Examples 1 to 5, a composition of the imide (a) obtained in Example 1 and a bisphenol A type epoxy compound (epoxy equivalent 475; EP 1001 manufactured by Shell Chemical Co.) and a composition of the imide (b) obtained in Example 2 and an unsaturated polyester (isophthalic acid-maleic anhydride-glycol) were measured and the results were listed in Table 3.

Table 2

| | | Application Example No. | 1 | 2 | 3 | 4 | 5 | 6 | 7 | 8 | 9 | 10 | 11 |
|---|---|---|---|---|---|---|---|---|---|---|---|---|---|
| Composition (parts) | Imide: | (a) | 100 | - | - | - | - | - | - | - | - | - | - |
| | | (b) | - | - | 100 | 100 | | - | - | - | - | - | - |
| | | (c) | - | - | - | - | 100 | 100 | - | - | - | - | - |
| | | (d) | - | - | - | - | - | - | 100 | 100 | - | - | - |
| | | (e) | - | 100 | - | - | - | - | - | - | 100 | 100 | 100 |
| | Diamine: 4,4'-diaminodiphenylmethane | | 100 | 200 | - | - | - | - | - | - | 50 | 100 | 100 |
| | Epoxy compound: novolac type ECN 1273 | | - | - | 80 | 120 | - | - | - | - | - | - | 100 |
| | Unsaturated polyester | | - | - | - | - | 50 | 100 | - | - | - | - | - |
| | Diallyl phthalate compound | | - | - | - | - | - | - | 30 | 60 | - | - | - |
| | N,N'-Substituted bis-maleimide | | - | - | - | - | - | - | - | - | 50 | 50 | - |
| Properties | Glass transition temp. (°C) | | 215 | 230 | 210 | 215 | 200 | 205 | 210 | 220 | 230 | 235 | 220 |
| | Flexural strength at 180°C (kg/cm2) | | 550 | 570 | 580 | 610 | 480 | 510 | 550 | 560 | 580 | 600 | 600 |
| | Retention of flexural strength, 30 days at 200°C (%) | | 100 | 100 | 100 | 100 | 90 | 95 | 100 | 100 | 100 | 100 | 100 |

Table 3

| Imide or its composition | Solubility | |
|---|---|---|
| | Acetone | N-Methyl-pyrrolidone |
| Imide of Example 1 | Excellent | Excellent |
| Imide of Example 2 | " | " |
| Imide of Example 3 | Good | " |
| Imide of Example 4 | Excellent | " |
| Imide of Example 5 | " | " |
| Imide of Example 1 / Epoxy compound weight ratio 40/60 | Excellent | Excellent |
| Imide of Example 2 / Unsaturated polyester Weight ratio 50/50 | " | " |

Example 8

100 Parts (0.267 mole) of aniline-formaldehyde resin (B) listed in Table 1, 90 parts (0.5 mole) of chlorotetrahydrophthalic anhydride and 39 parts (0.4 mole) of MA were reacted in the same manner as described in Example 1 to give an imide of the formula (V) (m = 1.5, n = 1.9, x = 0.1) (h). IR spectrum of this imide showed characteristic absorptions at 1710 $cm^{-1}$ and 1778 $cm^{-1}$ due to the imido group and at 950 $cm^{-1}$ due to the ethylenical double bond.

1 Example 9

100 Parts (0.31 mole) of aniline-formaldehyde resin (A) listed in Table 1, 60 parts (0.35 mole) of methylendomethylenetetrahydrophthalic anhydride and 48 parts (0.49 mole) of MA were reacted in the same manner as described in Example 1 to give an imide of the formula (V) ($m = 1.6$, $n = 1.1$, $x = 0.2$) (i). IR spectrum of this imide showed characteristic absorptions at 1712 $cm^{-1}$ and 1780 $cm^{-1}$ due to the imido group and at 948 $cm^{-1}$ due to the ethyleical double bond.

In the above-mentioned formulae (I) to (III), a group attached to the benzene ring is substantially represented by "$-CH_2-$" linkage, but the methylene linkage may be replaced by a small amount of dimethylene ether, methyleneimine or dimethyleneimine as is usual in this art.

WHAT IS CLAIMED IS:

1. An imide having the structural units of the formulae (I) and (II) in the molecule:

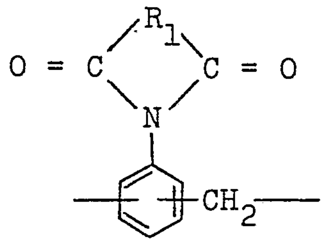 (I)

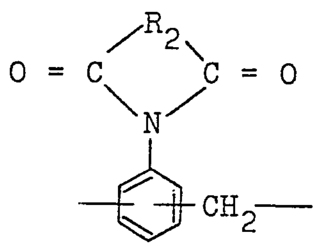 (II)

wherein $R_1$ is an ethylenically unsaturated group;

$R_2$ is 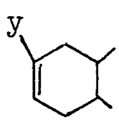 in which y is H, $CH_3$, $C_2H_5$, Cl, Br or $OCH_3$, or 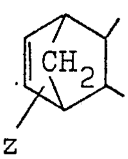 in which z is H or $CH_3$.

2. An imide according to Claim 1, wherein the imide having the structural units of the formulae (I) and (II) is represented by the formula:

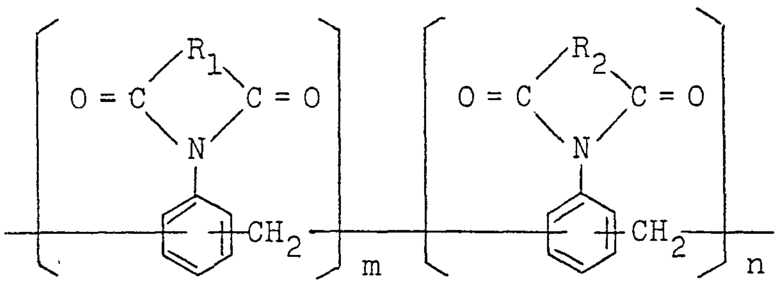 (III)

wherein m and n are more than zero, and m + n is 10 or less on an average, and $R_1$ and $R_2$ are as defined in Claim 1.

3. An imide according to Claim 1 or 2, wherein $R_1$ is a group of the formula: $-CH = CH-$, and $R_2$ is a group of the formula: 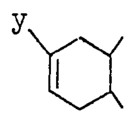 in which y is H or $CH_3$,

or 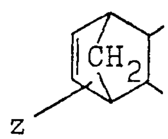 in which z is H.

4. An imide according to Claim 3, wherein m + n is 2 to 6 on an average.

5. An imide having the structural units of the formulae (I), (II) and (IV) in the molecule:

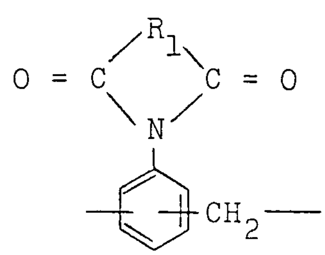 (I)

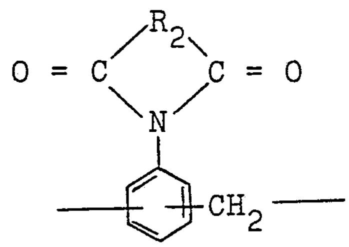

(II)

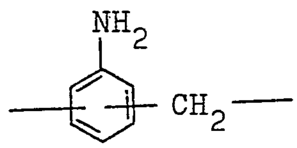

(IV)

wherein $R_1$ is an ethylenically unsaturated group;

$R_2$ is 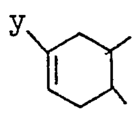 in which y is H, $CH_3$, $C_2H_5$, Cl, Br or $OCH_3$,

or 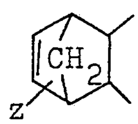 in which z is H or $CH_3$.

6. An imide according to Claim 5, wherein the imide having the structural units of the formulae (I), (II) and (IV) is represented by the formula:

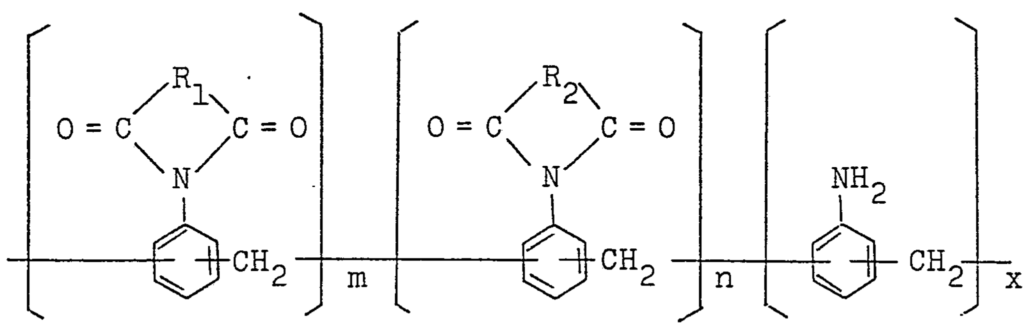

(V)

wherein m, n and x are more than zero, and m + n + x is 10 or less on an average and x is 0.5 to 6 on an average, and $R_1$ and $R_2$ are as defined in Claim 5.

7. An imide according to Claim 5 or 6, wherein $R_1$ is a group of the formula: $-CH = CH-$, and $R_2$ is a

group of the formula: 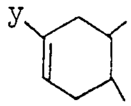 in which y is H or $CH_3$,

or 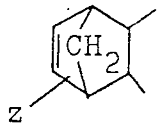 in which z is H.

8. An imide according to Claim 7, wherein m + n + x is 2 to 6 on an average.

9. A process for producing an imide having the structural units of the formulae (I) and (II), or the formulae (I), (II) and (IV), in the molecule:

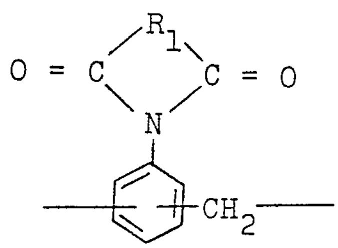

(I)

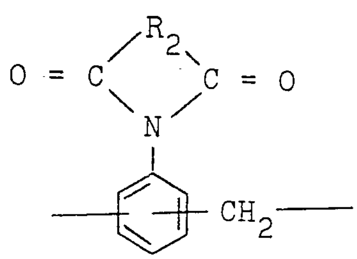

(II)

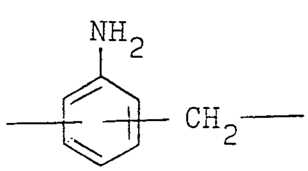

(IV)

wherein $R_1$ is an ethylenically unsaturated group;

$R_2$ is 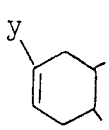 in which y is H, $CH_3$, $C_2H_5$, Cl, Br or

$OCH_3$, or 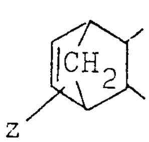 in which z is H or $CH_3$, which

comprises a step of reacting a compound of the formula:

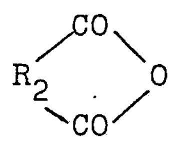

(VIII)

wherein $R_2$ is as defined above, with an aniline resin to give an amide acid, followed by dehydration and ring closure to form an imide ring, and a step of reacting the resulting imide ring-containing compound with an ethylenically unsaturated carboxylic acid anhydride of the formula:

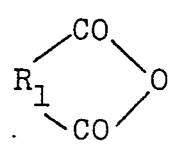

(IX)

wherein $R_1$ is as defined above, followed by dehydration and ring closure.

10. A process according to Claim 9, wherein the imide having the structural units of the formulae (I) and (II), or the formulae (I), (II) and (IV) is represented by the formula:

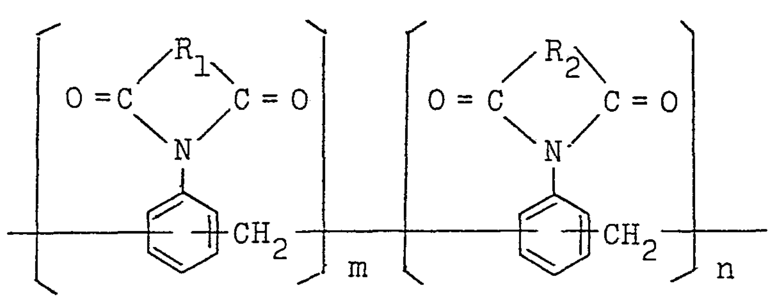

(III)

or

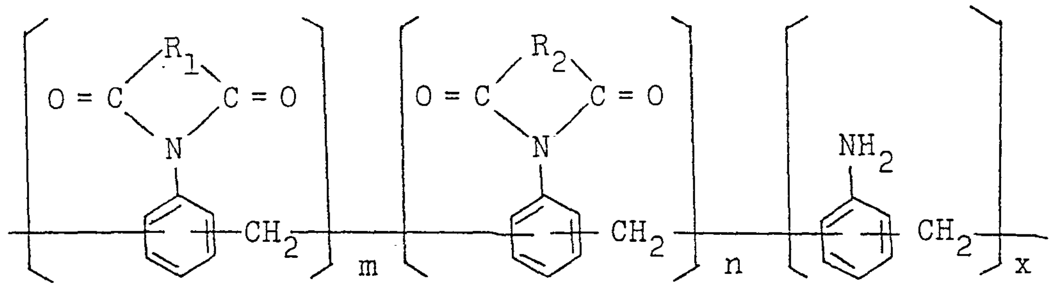 (V)

wherein $R_1$ is an ethylenically unsaturated group;

$R_2$ is 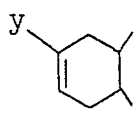 in which y is H, $CH_3$, $C_2H_5$, Cl, Br or $OCH_3$, or 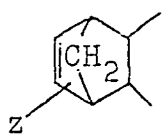, in which z is H or $CH_3$; m, n and x are more than zero and m + n or m + n + x is 10 or less on an average, and x is 0.5 to 6 on an average.

11. A process according to Claim 9 or 10, wherein the ethylenically unsaturated carboxylic acid anhydride of the formula (IX) is at least one of maleic anhydride and methylmaleic anhydride, and the compound of the formula (VIII) is at least one of tetrahydrophthalic anhydride, methyltetrahydrophthalic anhydride, endomethylenetetrahydrophthalic anhydride, and methylendomethylenetetrahydrophthalic anhydride.

12. A process for producing an imide having the structural units of the formulae (I) and (II), or the formulae (I), (II) and (IV), in the molecule:

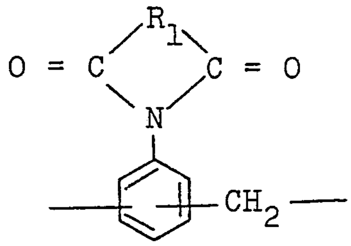

(I)

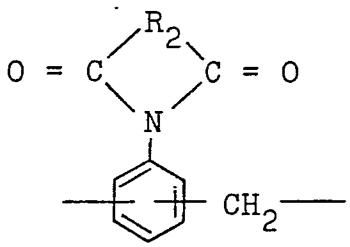

(II)

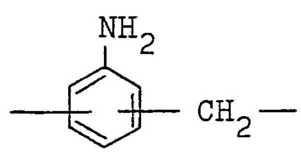

(IV)

wherein $R_1$ is an ethylenically unsaturated group; $R_2$ is 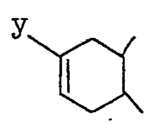 in which y is H, $CH_3$, $C_2H_5$, Cl, Br or $OCH_3$, or 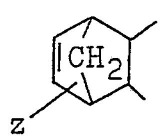 in which z is H or $CH_3$, which comprises a step of reacting a compound of the formula:

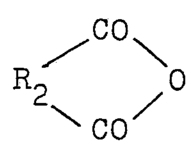

(VIII)

wherein $R_2$ is as defined above, with an aniline resin to give an amide acid, a step of reacting the amide acid with an ethylenically unsaturated carboxylic acid anhdyride of the formula:

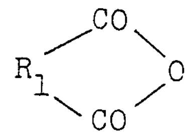

(IX)

wherein $R_1$ is as defined above, and a step of conducting dehydration and ring closure of all the amide groups.

13. A process according to Claim 12, wherein the imide having the structural units of the formulae (I) and (II), or the formulae (I), (II) and (IV) is represented by the formula:

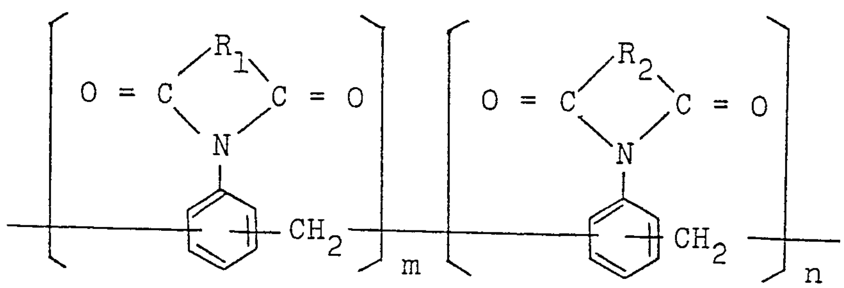

(III)

or

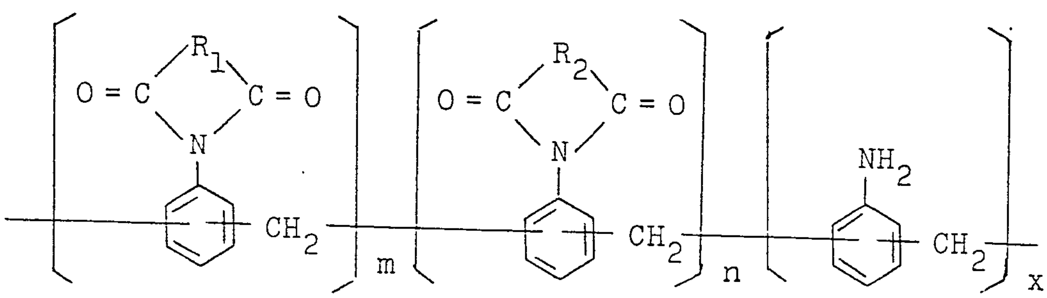

(V)

wherein $R_1$ is an ethylenically unsaturated group; $R_2$ is 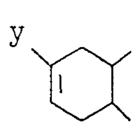 in which y is H, $CH_3$, $C_2H_5$, Cl, Br or $OCH_3$, or 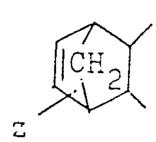 in which z is H or $CH_3$; m, n and x are

more than zero and m + n or m + n + x is 10 or less on an average, and x is 0.5 to 6 on an average.

14. A process according to Claim 12 or 13, wherein the ethylenically unsaturated carboxylic acid anhydride of the formula (IX) is at least one of maleic anhydride and methylmaleic anhydride, and the compound of the formula (VIII) is at least one of tetrahydrophthalic anhydride, methyltetrahydrophthalic anhydride, endomethylenetetrahydrophthalic anhydride, and methylendomethylenetetrahydrophthalic anhydride.

15. An amide acid of the formula:

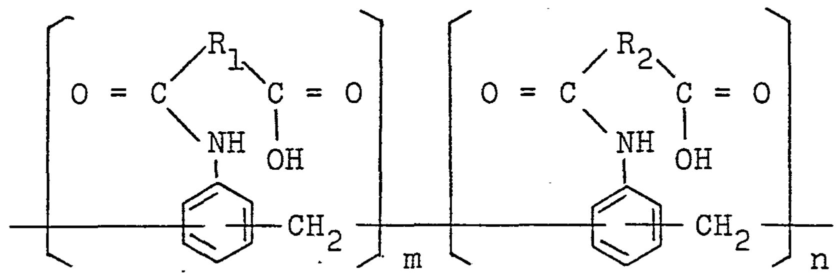

(XI), and/or

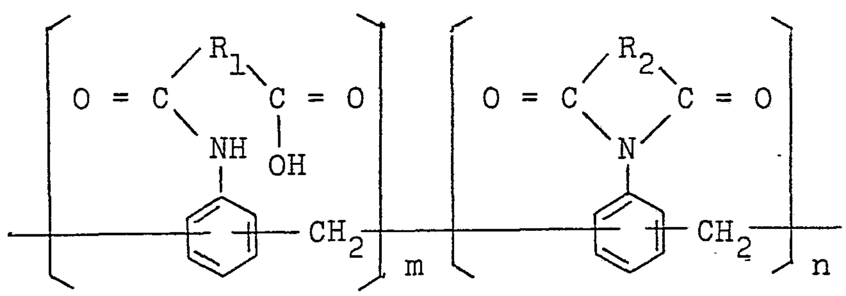

(XII), and/or

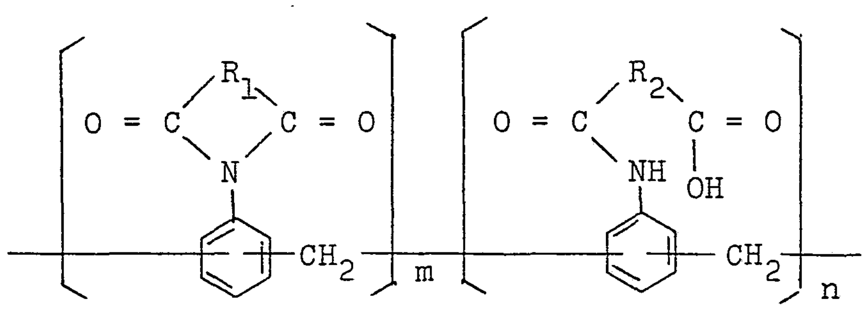

(XIII)

wherein $R_1$ is an ethylenically unsaturated group;

$R_2$ is 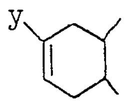 in which y is H, $CH_3$, $C_2H_5$, Cl, Br or $OCH_3$, or 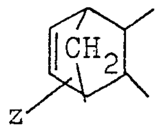 in which z is H or $CH_3$; m and n are more than zero and m + n is 10 or less on an average.

16. A resin composition comprising an amide acid of Claim 15 and one or more amines.

17. A cured resin obtained by heating the resin composition of Claim 16 at a temperature of 100 to 250°C.

18. A resin composition comprising an amide acid of Claim 15 and one or more epoxy compounds.

19. A cured resin obtained by heating the resin composition of Claim 18 at a temperature of 100 to 250°C.

20. A resin composition comprising an amide acid of Claim 15 and one or more unsaturated polyesters.

21. A cured resin obtained by heating the resin composition of Claim 20 at a temperature of 100 to 250°C.

22. A resin composition comprising an amide acid of Claim 15 and one or more aromatic compounds having at least one allyl group.

23. A resin composition comprising an imide having the structural units of the formulae (I) and (II), or the formulae (I), (II) and (IV), in the molecule:

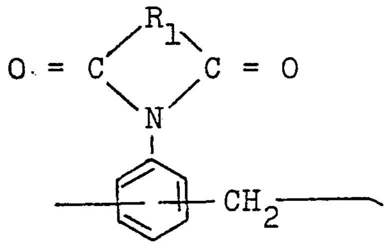

(I)

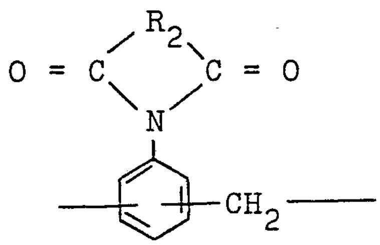

(II)

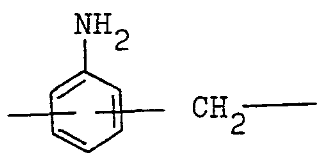

(IV)

wherein $R_1$ is an ethylenically unsaturated group; $R_2$ is 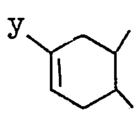 in which y is H, $CH_3$, $C_2H_5$, Cl, Br or $OCH_3$, or 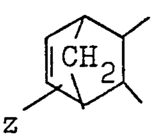 in which z is H or $CH_3$, and one or more amines.

24. A cured resin obtained by heating the resin composition of Claim 23 at a temperature of 100 to 300°C.

25. A resin composition comprising an imide having the structural units of the formulae (I) and (II), or the formulae (I), (II) and (IV), in the molecule:

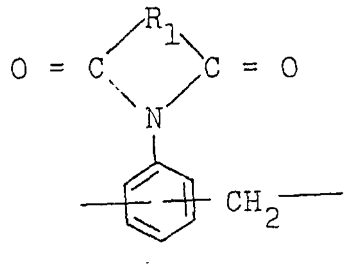

(I)

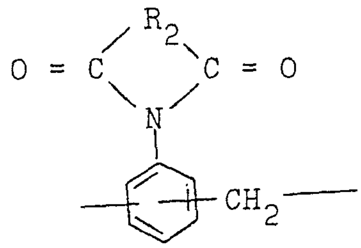

(II)

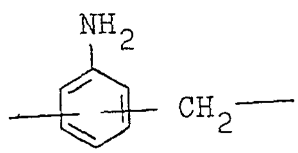

(IV)

wherein $R_1$ is an ethylenically unsaturated group;

$R_2$ is 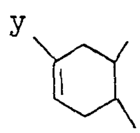 in which y is H, $CH_3$, $C_2H_5$, Cl, Br or $OCH_3$,

or 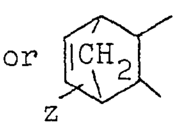 in which z is H or $CH_3$, and one or more epoxy compounds.

26. A cured resin obtained by heating the resin composition of Claim 25 at a temperature of 100 to 300°C.

27. A resin composition comprising an imide having the structural units of the formulae (I) and (II), or the formulae (I), (II) and (IV), in the molecule:

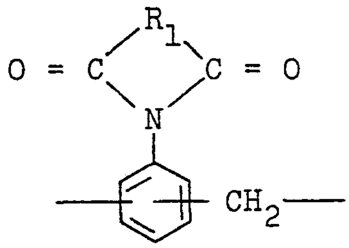

(I)

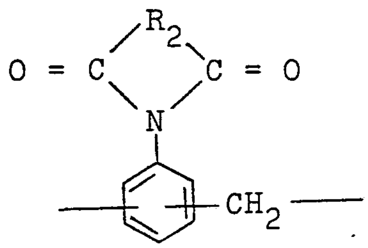

(II)

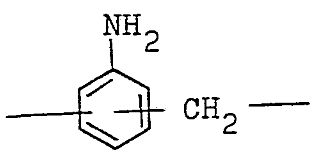

(IV)

wherein $R_1$ is an ethylenically unsaturated group;

$R_2$ is 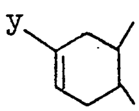 in which y is H, $CH_3$, $C_2H_5$, Cl, Br

or $OCH_3$, or 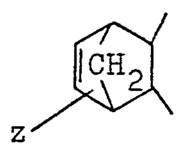 in which z is H or $CH_3$,

and one or more unsaturated polyesters.

28. A cured resin obtained by heating the resin composition of Claim 27 at a temperature of 100 to 300°C.

29. A resin composition comprising an imide having the structural units of the formulae (I) and (II), or the formulae (I), (II) and (IV), in the molecule:

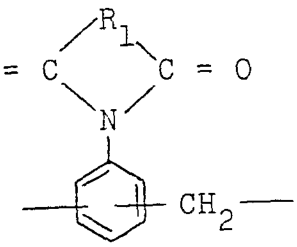

(I)

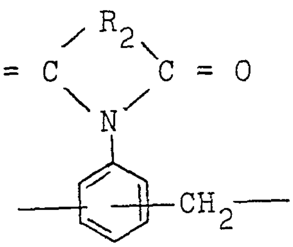

(II)

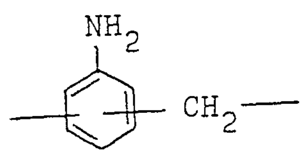

(IV)

wherein $R_1$ is an ethylenically unsaturated group;

$R_2$ is 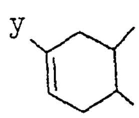 in which y is H, $CH_3$, $C_2H_5$, Cl, Br

or $OCH_3$, or 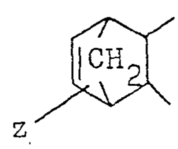 in which z is H or $CH_3$, and

one or more aromatic compounds having at least one allyl group.

30. A cured resin obtained by heating the resin composition of Claim 29 at a temperature of 100 to 300°C.

31. A varnish comprising an organic solvent and at least one resin composition selected from the group consisting of those of Claims 16, 18, 20, 22, 23, 25, 27, and 29, the amount of the resin composition in the varnish being 5% by weight or more.